# NEUE EUROPÄISCHE PATENTSCHRIFT

(11) **EP 0 825 294 B2**
(45) Veröffentlichungstag und Bekanntmachung des Hinweises auf die Entscheidung über den Einspruch: **09.02.2005**
(45) Hinweis auf die Patenterteilung: 15.09.1999
(21) Anmeldenummer: 97113174.3
(22) Anmeldetag: 31.07.1997
(51) Int. Cl.: D21C 9/10, D21C 5/00

(54) **Mehrkomponentensystem zum Verändern, Abbau oder Bleichen von Lignin, oder ligninhaltigen Materialien sowie Verfahren zu seiner Anwendung**
Multicomponent system for modifying, decomposing or bleaching lignin, or lignin-containing materials and method of using this system
Système à plusieurs constituants pour modifier, dégrader ou blanchir la lignine, ou les matières contenant de la lignine ainsi que procédés l'utilisant

(30) Priorität: 13.08.1996 DE 19632623
(43) Veröffentlichungstag der Anmeldung: 25.02.1998
(73) Patentinhaber: Consortium für elektrochemische Industrie GmbH, 81379 München (DE)
(72) Erfinder: Stohrer, Jürgen, Dr., 81479 München (DE); Freudenreich, Johannes, Dr., 80331 München (DE); Amann, Manfred, Dr., 85235 Odelzhausen (DE); Müller, Robert, 81379 München (DE); Call, Hans-Peter, Dr., 52531 Übach-Palenberg (DE)
(74) Vertreter: Potten, Holger

(56) Entgegenhaltungen:
- EP-A- 0 252 747
- EP-A- 0 717 143
- WO-A-94/29510
- WO-A2-96/18770
- M. Amann et al, Consortium für elektrochemische Industrie GmbH, Consortium/Wacker anlässlich der 2000 Pulping/Process & Prod. Quality Conference in Boston, USA, 2000 8 Seiten

## Beschreibung

Die vorliegende Erfindung betrifft ein Mehrkomponentensystem zum Verändern, Abbau oder Bleichen von Lignin oder ligninhaltigen Materialien sowie Verfahren zu seiner Anwendung.

Als heute hauptsächlich zur Zellstolfherstellung verwendete Verfahren sind das Sulfat- und das Sulfitverfahren zu nennen. Mit beiden Verfahren wird unter Kochung und unter Druck Zellstoff erzeugt. Das Sulfat-Verfahren arbeitet unter Zusatz von NaOH und Na₂S, während im Sulfit-Verfahren Ca(HSO₃)₂ + SO₂ zur Anwendung kommt.

Alle Verfahren haben als Hauptziel die Entfernung des Lignins aus dem verwendeten Pflanzenmaterial, Holz oder Einjahrespflanzen.

Das Lignin, das mit der Cellulose und der Hemicellulose den Hauptbestandteil des Pflanzenmaterials (Stengel oder Stamm) ausmacht, muß entfernt werden, da es sonst nicht möglich ist, nicht vergilbende und mechanisch hochbelastbare Papiere herzustellen.

Die Holzstofferzeugungsverfahren arbeiten mit Steinschleifern (Holzschliff) oder mit Refinem (TMP), die das Holz nach entsprechender Vorbehandlung (chemisch, thermisch oder chemischthermisch) durch Mahlen defibrillieren.

Diese Holzstoffe besitzen noch einen Großteil des Lignins. Sie werden v. a. für die Herstellung von Zeitungen, Illustrierten, etc. verwendet.

Seit einigen Jahren werden die Möglichkeiten des Einsatzes von Enzymen für den Ligninabbau erforscht. Der Wirkmechanismus derartiger lignolytischer Systeme ist erst vor wenigen Jahren aufgeklärt worden, als es gelang; durch geeignete Anzuchtbe-dingungen und Induktorzusätze bei dem Weißfäulepilz Phanerochaete chrysosporium zu ausreichenden Enzymmengen zu kommen. Hierbei wurden die bis dahin unbekannten Ligninperoxidasen und Manganperoxidasen entdeckt. Da Phanerochaete chrysosporium ein sehr effektiver Ligninabbauer ist, versuchte man dessen Enzyme zu isolieren und in gereinigter Form für den Ligninabbau zu verwenden. Dies gelang jedoch nicht, da sich herausstellte, daß die Enzyme vor allem zu einer Repolymerisation des Lignins und nicht zu dessen Abbau führen.

Ähnliches gilt auch für andere lignolytische Enzymspezies wie Laccasen, die das Lignin mit Hilfe von Sauerstoff anstelle von Wasserstoffperoxid oxidativ abbauen. Es konnte festgestellt werden, daß es in allen Fällen zu ähnlichen Prozessen kommt. Es werden nämlich Radikale gebildet, die wieder selbst miteinander reagieren und somit zur Polymerisation führen.

So gibt es heute nur Verfahren, die mit in-vivo Systemen arbeiten (Pilzsysteme). Hauptschwerpunkte von Optimierungsversu-chen sind das sogenannte Biopulping und das Biobleaching.

Unter Biopulping versteht man die Behandlung von Holzhack-schnitzeln mit lebenden Pilzsysternen.

Es gibt 2 Arten von Applikationsformen:
1. Vorbehandlung von Hackschnitzeln vor dem Refinem oder Mahlen zum Einsparen von Energie bei der Herstellung von Holzstoffen (z.B. TMP oder Holzschliff).
   Ein Vorteil ist die meist vorhandene Verbesserung der mechanischen Eigenschaften des Stoffes, ein Nachteil die schlechtere Endweiße.
2. Vorbehandlung von Hackschnitzeln (Softwood/Hardwood) vor der Zellstotfkochung (Kraftprozeß, Sulfitprozeß).

Hier ist das Ziel, die Reduzierung von Kochchemikalien, die Verbesserung der Kochkapazität und "extended cooking".

Als Vorteile werden auch eine verbesserte Kappareduzierung nach dem Kochen im Vergleich zu einem Kochen ohne Vorbehandlung erreicht.

Nachteile dieser Verfahren sind eindeutig die langen Behandlungszeiten (mehrere Wochen) und v.a. die nicht gelöste Kontaminierungsgefahr während der Behandlung, wenn man auf die wohl unwirtschaftliche Sterilisation der Hackschnitzel verzichten will.

Das Biobleaching arbeitet ebenfalls mit in-vivo Systemen. Der gekochte Zellstoff (Softwood/Hardwood) wird vor der Bleiche mit Pilz beimpft und für Tage bis Wochen behandelt. Nur nach dieser langen Behandlungszeit zeigt sich eine signifikante Kappazahlerniedrigung und Weißesteigerung, was den Prozeß unwirtschaftlich für eine Implamentierung in den gängigen Bleichsequenzen macht.

Eine weitere meist mit immobilisierten Pilzsystemen durchgeführte Applikation ist die Behandlung von Zellstoffabrikati-onsabwässern, insbesondere Bleichereiabwässern zu deren Entfärbung und Reduzierung des AOX (Reduzierung von chlorierten Verbindungen im Abwasser, die Chlor- oder Chlordioxid-Bleich-stufen verursachen).

Darüber hinaus ist bekannt, Hemicellulasen u.a. Xylanasen, Mannanasen als "Bleichbooster" einzusetzen.

Diese Enzyme sollen hauptsächlich gegen das nach dem Kochpro-zeß das Restlignin zum Teil überdeckende reprecipitierte Xylan wirken und durch dessen Abbau die Zugänglichkeit des Lignins für die in den nachfolgenden Bleichsequenzen angewendeten Bleichchemikalien (v.a. Chlordioxid) erhöhen. Die im Labor nachgewiesenen Einsparungen von Bleichchemikalien wurden in großem Maßstab nur bedingt bestätigt, so daß man diesen Enzym-typ allenfalls als Bleichadditiv einstufen kann.

Als Cofaktor neben den lignolytischen Enzymen nimmt man Che-latsubstanzen (Siderophoren, wie Ammoniumoxalat) und Biotensi-de an.

In der Anmeldung PCT/EP87/00635 wird ein System zur Entfernung von Lignin aus lignincellulosehaltigem Material unter gleichzeitiger Bleiche beschrieben, welches mit lignolytischen Enzymen aus Weißfäulepilzen unter Zusatz von Reduktions- und Oxidationsmitteln und phenolischen Verbindungen als Mediatoren arbeitet.

In der DE 4008893C2 werden zusätzlich zu Red/Ox-System "Mimic Substanzen", die das aktive Zentrum (prosthetische Gruppe) von lignolytischen Enzymen simulieren, zugesetzt. So konnte eine erhebliche Performanceverbesserung erzielt werden.

In der Anmeldung PCT/EP92/01086 wird als zusätzliche Verbesserung eine Redoxkaskade mit Hilfe von im Oxidationspotential "abgestimmten" phenolischen oder nichtphenolischen Aromaten eingesetzt.

Bei allen drei Verfahren ist die Limitierung für einen groß-technischen Einsatz die Anwendbarkeit bei geringen Stoffdichten (bis maximal 4%) und bei den beiden letzten Anmeldungen die Gefahr des "Ausleachens" von Metallen beim Einsatz der Chelatverbindungen, die v.a. bei nachgeschalteten Peroxid-bleichstufen zur Zerstörung des Peroxids führen können.

Aus WO 94/12619, WO 94/12620 und WO 94/12621 sind Verfahren bekannt, bei welchen die Aktivität von Peroxidase mittels sogenannter Enhancer-Substanzen gefördert werden.

Die Enhancer-Substanzen werden in WO 94/12619 anhand ihrer Halbwertslebensdauer charakterisiert.

Gemäß WO 94/12620 sind Enhancer-Substanzen durch die Formel A=N-N=B charakterisiert, wobei A und B jeweils definierte cy-clische Reste sind.

Gemäß WO 94/12620 sind Enhancer-Substanzen organische Chemikalien, die mindestens zwei aromatische Ringe enthalten, von denen zumindest einer mit jeweils definierten Resten substituiert ist.

Alle drei Anmeldungen betreffen "dye transfer inhibition" und den Einsatz der jeweiligen Enhancer-Substanzen zusammen mit Peroxidasen als Detergent-Additiv oder Detergent-Zusammensetzung im Waschmittelbereich. Zwar wird in der Beschreibung der Anmeldung auf eine Verwendbarkeit zum Behandeln von Lignin verwiesen, aber eigene Versuche mit den in den Anmeldungen konkret offenbarten Substanzen zeigten, daß sie als Mediatoren zur Steigerung der Bleichwirkung der Peroxidasen beim Behandeln von ligninhaltigen Materialien keine Wirkung zeigten!

WO 94/29510 beschreibt ein Verfahren zur enzymatischen Delignifizierung, bei dem Enzyme zusammen mit Mediatoren eingesetzt werden. Als Mediatoren werden allgemein Verbindungen mit der Struktur NO-, NOH- oder HRN-OH offenbart.

Von den in WO 94/29510 aufgeführten Mediatoren liefert 1-Hydroxy-1H-benzotriazol (HBT) die besten Ergebnisse in der Delignifizierung. HBT hat jedoch verschiedene Nachteile:

Es ist nur zu hohen Preisen und nicht in hinreichenden Mengen verlügbar.

Es reagiert unter Delignifizierungsbedingungen zu lH-Benzotriazol. Diese Verbindung ist relativ schlecht abbaubar und kann in größeren Mengen eine beträchtliche Umweltbelastung darstellen. Es führt in gewissem Umfang zu einer Schädigung von Enzymen. Seine Delignfizierungsgeschwindigkeit ist nicht allzu hoch.

Es ist daher wünschenswert, Systeme zum Verändern, Abbau oder Bleichen von Lignin oder ligninhaltigen Materialien zur Verfügung zu stellen, die die genannten Nachteile nicht oder in geringerem Maße aufweisen.

Die vorliegende Erfindung betrifft ein Mehrkomponentensystem zum Verändern, Abbau oder Bleichen von Lignin, oder ligninhaltigen Materialien gemäß Anspruch 1.

Als Mediatoren werden bevorzugt N-Hydroxyacetanilid, NHydroxyformanilid, N-Hydroxy-N-phenyl-methylcarbamat, N-Hydroxy-2-methylacetanilid, N-Hydroxy-4-methylacetanitid, 1-Hydroxy-3,4-dihydrochinolin-(1H) -2-on sowie N-Acetoxyacetanilid.

Das erfindungsgemäße Mehrkomponentensystem enthält Mediatoren, die kostengünstiger als die aus dem Stand der Technik bekannten Mediatoren, insbesondere kostengünstiger als HBT sind.

Darüber hinaus wird bei Einsatz der erfindungsgemäßen Mediatoren eine Steigerung der Delignifizierungsgeschwindigkeit erzielt.

Das erfindungsgemäße Mehrkomponentensystem umfaßt mindestens ein Enzym.

Im Sinne der Erfindung umfaßt der Begriff Enzym auch enzymatisch aktive Proteine oder Peptide oder prosthetische Gruppen von Enzymen.

Als Enzym können im erfindungsgemäßen Mehrkomponentensystem Oxidoreduktasen der Klassen 1.1.1 bis 1.97 gemäß Internationaler Enzym-Nomenklature, Committee of the International Union of Biochemistry and Molecular Biology (Enzyme Nomenclature, Academic Press, Inc., 1992, S. 24-154) eingesetzt werden.

Vorzugsweise werden Enzyme der im folgenden genannten Klassen eingesetzt:

Enzyme der Klasse 1.1, die alle Dehydrogenasen, die auf primäre, sekundäre Alkohole und Semiacetale wirken, umfassen und die als Akzeptoren NAD⁺ oder NADP⁺ (Subklasse 1.1.1), Cytochrome (1.1.2), Sauerstoff (O₂) (1.1.3), Disulfide (1.1.4), Chinone (1.1.5) oder die andere Akzeptoren haben (1.1.99).

Aus dieser Klasse sind besonders bevorzugt die Enzyme der Klasse 1.1.5 mit Chinonen als Akzeptoren und die Enzyme der Klasse 1.1.3 mit Sauerstoff als Akzeptor.

Insbesondere bevorzugt in dieser Klasse ist Cellobiose: quinone-1-oxidoreduktase (1.1.5.1).

Weiterhin bevorzugt sind Enzyme der Klasse 1.2. Diese Enzym-klasse umfaßt solche Enzyme, die Aldehyde zu den korrespondierenden Säuren oder Oxo-Gruppen oxidieren. Die Akzeptoren können NAD⁺, NADP⁺ (1.2.1), Cytochrome (1.2.2), Sauerstoff (1.2.3), Sulfide (1.2.4), Eisen-Schwefel-Proteine (1.2.5) oder andere Akzeptoren (1.2.99) sein.

Besonders bevorzugt sind hier die Enzyme der Gruppe (1.2.3) mit Sauerstoff als Akzeptor.

Weiterhin bevorzugt sind Enzyme der Klasse 1.3.

In dieser Klasse sind Enzyme zusammengefaßt, die auf CH-CHGruppen des Donors wirken.

Die entsprechenden Akzeptoren sind NAD⁺, NADP⁺ (1.3.1), Cytochrome (1.3.2), Sauerstoff (1.3.3), Chinone oder verwandte Verbindungen (1.3.5), Eisen-Schwefel-Proteine (1.3.7) oder andere Akzeptoren (1.3.99).

Besonders bevorzugt ist die Bilirubinoxidase (1.3.3.5).

Hier sind ebenfalls die Enzyme der Klasse (1.3.3) mit Sauerstoff als Akzeptor und (1.3.5) mit Chinonen etc. als Akzeptor besonders bevorzugt.

Weiterhin bevorzugt sind Enzyme der Klasse 1.4, die auf CH-NH₂-Gruppen des Donors wirken.

Die entsprechenden Akzeptoren sind NAD⁺, NADP⁺ (1.4.1), Cytochrome (1.4.2), Sauerstoff (1.4.3), Disulfide (1.4.4), Eisen-Schwefel-Proteine (1.4.7) oder andere Akzeptoren (1.4.99).

Besonders bevorzugt sind auch hier Enzyme der Klasse 1.4.3 mit Sauerstoff als Akzeptor.

Weiterhin bevorzugt sind Enzyme der Klasse 1.5, die auf CH-NHGruppen des Donors wirken. Die entsprechenden Akzeptoren sind NAD⁺, NADP⁺ (1.5.1), Sauerstoff (1.5.3), Disulfide (1.5.4), Chinone (1.5.5) oder andere Akzeptoren (1.5.99).

Auch hier sind besonders bevorzugt Enzyme mit Sauerstoff (O₂) (1.5.3) und mit Chinonen (1.5.5) als Akzeptoren.

Weiterhin bevorzugt sind Enzyme der Klasse 1.6, die auf NADH oder NADPH wirken.

Die Akzeptoren sind hier NADP⁺ (1.6.1), Hämproteine (1.6.2), Disulfide (1.6.4), Chinone (1.6.5), NO₂-Gruppen (1.6.6), und ein Flavin (1.6.8) oder einige andere Akzeptoren (1.6.99).

Besonders bevorzugt sind hier Enzyme der Klasse 1.6.5 mit Chinonen als Akzeptoren.

Weiterhin bevorzugt sind Enzyme der Klasse 1.7, die auf andere NO₂-Verbindungen als Donatoren wirken und als Akzeptoren Cytochrome (1.7.2), Sauerstoff (O₂) (1.7.3), Eisen-Schwefel-Proteine (1.7.7) oder andere (1.7.99) haben.

Hier sind besonders bevorzugt die Klasse 1.7.3 mit Sauerstoff als Akzeptor.

Weiterhin bevorzugt sind Enzyme der Klasse 1.8, die auf Schwefelgruppen als Donatoren wirken und als Akzeptoren NAD⁺, NADP⁺ (1.8.1), Cytochrome (1.8.2), Sauerstoff (O₂) (1.8.3), Disulfide (1.8.4), Chinone (1.8.5), Eisen-Schwefel-Proteine (1.8.7) oder andere (1.8.99) haben.

Besonders bevorzugt ist die Klasse 1.8.3 mit Sauerstoff (O₂) und (1.8.5) mit Chinonen als Akzeptoren.

Weiterhin bevorzugt sind Enzyme der Klasse 1.9, die auf Hämgruppen als Donatoren wirken und als Akzeptoren Sauerstoff (O₂) (1.9.3), NO₂-Verbindungen (1.9.6) und andere (1.9.99) haben.

Besonders bevorzugt ist hier die Gruppe 1.9.3 mit Sauerstoff (O₂) als Akzeptor (Cytochromoxidasen).

Weiterhin bevorzugt sind Enzyme der Klasse 1.12, die auf Wasserstoff als Donor wirken.

Die Akzeptoren sind NAD⁺ oder NADP⁺ (1.12.1) oder andere (1.12.99).

Desweiteren bevorzugt sind Enzyme der Klasse 1.13 und 1.14 (Oxigenasen).

Weiterhin sind bevorzugte Enzyme die der Klasse 1.15 , die auf Superoxid-Radikale als Akzeptoren wirken.

Besonders bevorzugt ist hier die Superoxid-Dismutase (1.15.1.1).

Weiterhin sind bevorzugt Enzyme der Klasse 1.16.

Als Akzeptoren wirken NAD⁺ oder NADP⁺ (1.16.1) oder Sauerstoff (O₂) (1.16.3).

Besonders bevorzugt sind hier Enzyme der Klasse 1.16.3.1 (Ferroxidase, z.B. Ceruloplasmin).

Weiterhin bevorzugte Enzyme sind diejenigen, die der Gruppe 1.17 (Wirkung auf CH₂-Gruppen, die zu -CHOH- oxidiert werden), 1.18 (Wirkung auf reduziertes Ferredoxin als Donor), 1.19 (Wirkung auf reduziertes Flavodoxin als Donor) und 1.97(andere Oxidoreduktasen) angehören.

Weiterhin besonders bevorzugt sind die Enzyme der Gruppe 1.11. die auf ein Peroxid als Akzeptor wirken. Diese einzige Subklasse (1.11.1) enthält die Peroxidasen.

Besonders bevorzugt sind hier die Cytochrom-C-Peroxidasen (1.11.1.5), Catalase (1.11.1.6), die Peroxydase (1.11.1.6), die Iodid-Peroxidase (1.11.1.8), die Glutathione-Peroxidase (1.11.1.9), die Chlorid-Peroxidase (1.11.1.10), die L-Ascor-bat-Peroxidase (1.11.1.11), die Phospholipid-HydroperoxidGlutathione-Peroxidase (1.11.1.12), die Mangan-Peroxidase (1.11.1.13), die Diarylpropan-Peroxidase (Ligninase, LigninPeroxidase) (1.11.1.14).

Ganz besonders bevorzugt sind Enzyme der Klasse 1.10, die auf Biphenole und verwandten Verbindungen wirken. Sie katalysieren die Oxidation von Biphenolen und Ascorbaten. Als Akzeptoren fungieren NAD⁺, NADP⁺ (1.10.1), Cytochrome (1.10.2), Sauerstoff (1.10.3) oder andere (1.10.99).

Von diesen wiederum sind Enzyme der Klasse 1.10.3 mit Sauerstoff (O₂) als Akzeptor besonders bevorzugt.

Von den Enzymen dieser Klasse sind die Enzyme Catechol Oxidase (Tyrosinase) (1.10.3.1), L-Ascorbate Oxidase (1.10.3.3), o-Aminophenol Oxidase (1.10.3.4) und Laccase (Benzoldiol: Oxigen Oxidoreduktase) (1.10.3.2) bevorzugt, wobei die Laccasen (Benzoldiol: Oxigen Oxidoreduktase) (1.10.3.2) insbesondere bevorzugt sind.

Die genannten Enzyme sind käuflich erhältlich oder lassen sich nach Standardverfahren gewinnen. Als Organismen zur Produktion der Enzyme kommen beispielsweise Pflanzen, tierische Zellen, Bakterien und Pilze in Betracht. Grundsätzlich können sowohl natürlich vorkommende als auch gentechnisch veränderte Organismen Enzymproduzenten sein. Ebenso sind Teile von einzelli-gen oder mehrzelligen Organismen als Enzymproduzenten denkbar, vor allern Zellkulturen.

Für die insbesondere bevorzugten Enzyme, wie die aus der Gruppe 1.11.1 vor allem aber 1.10.3 und insbesondere zur Produktion von Laccasen werden beispielsweise Weißfäulepilze wie Pleu-rotus, Phlebia und Trametes verwendet.

Das erfindungsgemäße Mehrkomponentensystem umfaßt mindestens ein Oxidationsmittel. Als Oxidationsmittel können beispielsweise Luft, Sauerstoff, Ozon, H₂O₂, organische Peroxide, Persäuren wie die Peressigsäure, Perameisensäure, Perschwefelsäu-re, Persalpetersäure, Metachlorperoxibenzosäure, Perchlorsäure, Perborate, Peracetate, Persulfate, Peroxide oder Sauerstoffspezies und deren Radikale wie OH, OOH, Singulettsauerstoff, Superoxid (O₂⁻), Ozonid, Dioxygenyl-Kation (O₂⁺), Dioxirane, Dioxetane oder Fremy Radikale eingesetzt werden.

Vorzugsweise werden solche Oxidationsmittel eingesetzt, die entweder durch die entsprechenden Oxidoreduktasen generiert werden können z.B. Dioxirane aus Laccasen plus Carbonylen oder die chemisch den Mediator regenerieren können oder diesen direkt umsetzen können.

Die Erfindung betrifft auch die Verwendung der in Anspruch 1 genannten Mediatoren zum Verändern, Abbau oder Bleichen von Lignin oder ligninhaltigen Materialien.

Die Wirksamkeit des Mehrkomponentensystems beim Verändern, Abbau oder Bleichen von Lignin oder ligninhaltigen Materialien ist häufig nochmals gesteigert, wenn neben den genannten Bestandteilen noch Mg²⁺ Ionen vorhanden sind. Die Mg²⁺ Ionen können beispielsweise als Salz, wie z.B. MgSO₄, eingesetzt werden. Die Konzentration liegt im Bereich von 0,1 - 2 mg/g ligninhaltigem Material, vorzugsweise bei 0,2 - 0,6 mg/g.

In manchen Fällen läßt sich eine weitere Steigerung der Wirksamkeit des erfindungsgemäßen Mehrkomponentensystems dadurch erreichen, daß das Mehrkomponentensystem neben den Mg²⁺ Ionen auch Komplexbildner wie z.B. Ethylendiamintetraessigsäure (EDTA), Diethylentriaminpentaessigsäure (DTPA), Hydroxyethylendiamintriessigsäure (HEDTA), Diethylentriaminpentamethylenphosphonsäure (DTMPA), Nitrilotriessigsäure (NTA), Polyphosphorsäure (PPA) etc. enthält. Die Konzentration liegt im Bereich von 0,2 - 5 mg/g ligninhaltigem Material, vorzugsweise bei 1 - 3 mg.

Der Einsatz des erfindungsgemäßen Mehrkomponentensystems in einem Verfahren zu Behandeln von Lignin erfolgt beispielsweise dadurch, daß man die jeweils ausgewählten Komponenten a) bis c) gemäß Anspruch 1 gleichzeitig oder in beliebiger Reihenfolge mit einer wässrigen Suspension des ligninhaltigen Materials mischt.

Vorzugsweise wird ein Verfahren unter Einsatz des erfindungs-gemäßen Mehrkomponentensystems in Gegenwart von Sauerstoff oder Luft bei Normaldruck bis 10 bar und in einem pH-Bereich von 2 bis 11, bei einer Temperatur von 20 bis 95°C, vorzugsweise 40 - 95°C, und einer Stoffdichte von 0,5 bis 40 % durchgeführt.

Ein für den Einsatz von Enzymen bei der Zellstoffbleiche unge-wöhnlicher und überraschender Befund ist, daß beim Einsatz des erfindungsgemäßen Mehrkomponentensystems eine Steigerung der Stoffdichte eine erhebliche Steigerung der Kappaerniedrigung ermöglicht.

Aus ökonomischen Gründen bevorzugt wird ein erfindungsgemäßes Verfahren bei Stoffdichten von 8 bis 35 %, besonders bevorzugt 9 bis 15 % durchgeführt.

Überraschenderweise zeigte sich ferner, daß eine saure Wäsche (pH 2 bis 6, vorzugsweise 4 bis 5) oder Q-Stufe (pH-Wert 2 bis 6, vorzugsweise 4 bis 5) vor der Enzym-Mediatorstufe bei manchen Zellstoffen zu einer erheblichen Kappazahlerniedrigung im Vergleich zur Behandlung ohne diese spezielle Vorbehandlung führt. In der Q-Stufe werden als Chelatbildner die zu diesem Zwecke üblichen Substanzen (wie z.B. EDTA, DTPA) eingesetzt. Sie werden vorzugsweise in Konzentrationen von 0,1 % bis 1 % (w/w bezogen auf trockenen Zellstoff) besonders bevorzugt 0,1% bis 0,5 % (w/w bezogen auf trockenen Zellstoff) eingesetzt.

Im erfindungsgemäßen Verfahren werden vorzugsweise 0,01 bis 100.000 IU Enzym pro g ligninhahiges Material eingesetzt. Besonders bevorzugt werden 0,1 bis 100 insbesondere bevorzugt werden 1 bis 40 IU Enzym pro g ligninhaltiges Material eingesetzt (1 U entspricht dem Umsatz von 1 µmol 2,2'-Azino-bis (3-ethyl-benzothiazolin-6-sulfonsäure-diammonium satz) (ABTS) / min / ml Enzym).

Im erfindungsgemäßen Verfahren werden vorzugsweise 0,01 mg bis 100 mg Oxidationsmittel pro g lign inhaltigem Material eingesetzt. Besonders bevorzugt werden 0,01 bis 50 mg Oxidationsmittel pro g ligninhaltigem Material eingesetzt.

Im erfindungsgemäßen Verfahren werden vorzugsweise 0,5 bis 80 mg Mediator pro g ligninhaltigem Material eingesetzt. Besonders bevorzugt werden 0,5 bis 40 mg Mediator pro g ligninhaltigem Material eingesetzt.

Gleichzeitig können Reduktionsmittel zugegeben werden, die zusammen mit den vorhandenen Oxidationsmitteln zur Einstellung eines bestimmten Redoxpotentials dienen.

Als Reduktionsmittel können Natrium-Bisulfit, Natrium-Dithionit, Ascorbinsäure, Thioverbindungen, Mercaptoverbindungen oder Glutathion etc. eingesetzt werden.

Die Reaktion läuft beispielsweise bei Laccase unter Luft- oder Sauerstoffzufuhr oder Sauerstoff- bzw. Luftüberdruck ab, bei den Peroxidasen (z.B. Ligninperoxidasen, Manganperoxidasen) mit Wasserstoffperoxid. Dabei können beispielsweise der Sauerstoff auch durch Wasserstoffperoxid + Katalase und Wasserstoffperoxid durch Glucose + GOD oder andere Systeme in situ generiert werden.

Außerdem können dem System Radikalbildner oder Radikalfänger (Abfangen von beispielsweise OH oder OOH Radikalen) zugesetzt werden. Diese können das Zusammenspiel innerhalb der Red/Oxund Radikalmediatoren verbessern.

Der Reaktionslösung können auch weitere Metallsalze zugegeben werden.

Diese sind im Zusammenwirken mit Chelatbildnern als Radikalbildner oder Red/Ox-Zentren wichtig. Die Salze bilden in der Reaktionslösung Kationen. Solche Ionen sind u.a. Fe²⁺, Fe³⁺, Mn²⁺, Mn³⁺, Mn⁴⁺, Cu²⁺, Ca²⁺, Ti³⁺, Cer⁴⁺, Al³⁺.

Die in der Lösung vorhandenen Chelate können darüber hinaus als Mimicsubstanzen für die Enzyme, beispielsweise für die Laccasen (Kupferkomplexe) oder für die Lignin- oder Manganperoxidasen (Hämkomplexe) dienen. Unter Mimicsubstanzen sind solche Stoffe zu verstehen, die die prosthetischen Gruppen von (hier) Oxidoreduktasen simulieren und z.B. Oxidationsreaktio-nen katalysieren können.

Weiterhin kann dem Reaktionsgemisch NaOCl zugesetzt werden. Diese Verbindung kann im Zusammenspiel mit Wasserstoffperoxid Singulettsauerstoff bilden.

Schließlich ist es auch möglich, unter Einsatz von Detergentien zu arbeiten. Als solche kommen nicht-ionische, anionische, kationische und amphotere Tenside in Betracht. Die Detergentien können die Penetration der Enzyme und Mediatoren in die Faser verbessern.

Ebenso kann es für die Reaktion förderlich sein, Polysaccharide und/oder Proteine zuzusetzen. Hier sind insbesondere als Polysaccharide Glucane, Mannane, Dextrane, Lävane, Pektine, Alginate oder Pflanzengummis und/oder eigene von den Pilzen gebildete oder in der Mischkultur mit Hefen produzierte Polysaccharide und als Proteine Gelantine und Albumin zu nennen.

Diese Stoffe dienen hauptsächlich als Schutzkolloide für die Enzyme.

Weitere Proteine, die zugesetzt werden können, sind Proteasen wie Pepsin, Bromelin, Papain usw.. Diese können u.a. dazu dienen, durch den Abbau des im Holz vorhandenen Extensins C, hydroxyprolinreiches Protein, einen besseren Zugang zum Lignin zu erreichen.

Als weitere Schutzkolloide kommen Aminosäuren, Einfachzucker, Oligomerzucker, PEG-Typen der verschiedensten Molekulargewichte, Polyethylenoxide, Potyethylenimine und Polydimethylsiloxa-ne in Frage.

Das erfindungsgemäße Verfahren kann nicht nur bei der Delignifizierung (Bleiche) von Sulfat-, Sulfit-, Organosol-, o.a. Zellstoffen und von Holzstoffen eingesetzt werden, sondern auch bei der Herstellung von Zellstoffen allgemein, sei es aus Holz- oder Einjahrespflanzen, wenn eine Defibrillierung durch die üblichen Kochverfahren (verbunden eventuell mit mechanischen Verfahren oder Druck) d.h. eine sehr schonende Kochung bis zu Kappazahlen, die im Bereich von ca. 50 - 120 Kappa liegen können, gewährleistet ist.

Bei der Bleiche von Zellstoffen wie auch bei der Herstellung von Zellstoffen kann die Behandlung mehrfach wiederholt werden, entweder nach Wäsche und Extraktion des behandelten Stoffes mit NaOH oder ohne diese Zwischenschritte. Dies führt zu noch wesentlich weiter reduzierbaren Kappawerten und zu erheblichen Weißesteigerungen. Ebenso kann vor der Enzym/Mediator-behandlung eine O₂-Stufe eingesetzt werden oder auch wie bereits erwähnt eine saure Wäsche oder Q-Stufe (Chelatstufe) ausgeführt werden.

Im folgenden wird die Erfindung anhand von Beispielen näher erläutert:

### Beispiel 1

### Enzymatische Bleiche mit N-Hydroxy-acetanilid und Softwood Sulfatzellstoff

5 g atro Zellstoff (Softwood O₂ delignifiziert), Stoffdichte 30% (ca. 17 g feucht) werden zu folgenden Lösungen gegeben:
A) 20 ml Leitungswasser werden mit 56,5 mg N-Hydroxy-acetani-lid unter Rühren versetzt, der pH-Wert mit 0,5 mol/l H₂SO₄-Lsg. so eingestellt, daß nach Zugabe des Zellstoffs und des Enzyms pH 4,5 resultiert.
B) 5 ml Leitungswasser werden mit der Menge Laccase von Trametes versicolor versetzt, daß eine Aktivität von 15 U (1 U = Umsatz von 1 µmol ABTS/min/ml Enzym) pro g Zellstoff resultiert.

Die Lösungen A und B werden zusammen gegeben und auf 33 ml aufgefüllt.

Nach Zugabe des Zellstoffes wird für 2 min mit einem Teigkne-ter gemixt.

Danach wird der Stoff in eine auf 45°C vorgeheizte Reaktions-bombe gegeben und unter 1 - 10 bar Sauerstoffüberdruck für 1 - 4 Stunden inkubiert.

Danach wird der Stoff über einem Nylonsieb (30 µm) gewaschen und 1 Stunde bei 60°C, 2% Stoffdichte und 8% NaOH pro g Zellstoff extrahiert.

Nach erneuter Wäsche des Stoffes wird die Kappazahl bestimmt. Ergebnis vergl. Tabelle 1

### Beispiel 2

### Enzymatische Bleiche mit N-Hydroxy-3-oxobuttersäureanilid und Softwood Sulfatzellstoff

5 g atro Zellstoff (Softwood O₂ delignifiziert), Stoffdichte 30% (ca. 17 g feucht) werden zu folgenden Lösungen gegeben:
A) 20 ml Leitungswasser werden mit 72,5 mg N-Hydroxy-3-oxobuttersäureanilid unter Rühren versetzt, der pH-Wert mit 0,5 mol/l H₂SO₄-Lsg. so eingestellt, daß nach Zugabe des Zellstoffs und des Enzyms pH 4,5 resultiert.
B) 5 ml Leitungswasser werden mit der Menge Laccase von Trametes versicolor versetzt, daß eine Aktivität von 15 U (1 U = Umsatz von 1 µmol ABTS/min/ml Enzym) pro g Zellstoff resultiert.

Die Lösungen A und B werden zusammen gegeben und auf 33 ml aufgefüllt.

Nach Zugabe des Zellstoffes wird für 2 min mit einem Teigkne-ter gemixt.

Danach wird der Stoff in eine auf 45°C vorgeheizte Reaktions-bombe gegeben und unter 1 - 10 bar Sauerstoffüberdruck für 1 - 4 Stunden inkubiert.

Danach wird der Stoff über einem Nylonsieb (30 µm) gewaschen und 1 Stunde bei 60°C, 2% Stoffdichte und 8% NaOH pro g Zellstoff extrahiert.

Nach erneuter Wäsche des Stoffes wird die Kappazahl bestimmt. Ergebnis vergl. Tabelle 1

### Beispiel 3

### Enzymatische Bleiche mit N-Hydroxy-4-cyanoacetanilid und Softwood Sulfatzellstoff

5 g atro Zellstoff (Softwood O₂ delignifiziert), Stoffdichte 30% (ca. 17 g feucht) werden zu folgenden Lösungen gegeben:
A) 20 ml Leitungswasser werden mit 66 mg N-Hydroxy-4-cyanoacetanilid unter Rühren versetzt, der pH-Wert mit 0,5 mol/l H₂SO₄-Lsg. so eingestellt, daß nach Zugabe des Zellstoffs und des Enzyms pH 4,5 resultiert.
B) 5 ml Leitungswasser werden mit der Menge Laccase von Trametes versicolor versetzt, daß eine Aktivität von 15 U (1 U = Umsatz von 1 µmol ABTS/min/ml Enzym) pro g Zellstoff resultiert.

Die Lösungen A und B werden zusammen gegeben und auf 33 ml aufgefüllt.

Nach Zugabe des Zellstoffes wird für 2 min mit einem Teigkne-ter gemixt.

Danach wird der Stoff in eine auf 45°C vorgeheizte Reaktions-bombe gegeben und unter 1 - 10 bar Sauerstoffüberdruck für 1 - 4 Stunden inkubiert.

Danach wird der Stoff über einem Nylonsieb (30 µm) gewaschen und 1 Stunde bei 60°C, 2% Stoffdichte und 8% NaOH pro g Zellstoff extrahiert.

### Beispiel 4

### Enzymatische Bleiche mit N-Hydroxy-N-phenylformamid und Softwood Sulfatzellstoff

5 g atro Zellstoff (Softwood O₂ delignifiziert), Stoffdichte 30% (ca. 17 g feucht) werden zu folgenden Lösungen gegeben:
A) 20 ml Leitungswasser werden mit 51,5 mg N-Hydroxy-N-phenylformamid unter Rühren versetzt, der pH-Wert mit 0,5 mol/l H₂SO₄-Lsg. so eingestellt, daß nach Zugabe des Zellstoffs und des Enzyms pH 4,5 resultiert.
B) 5 ml Leitungswasser werden mit der Menge Laccase von Trametes versicolor versetzt, daß eine Aktivität von 15 U (1 U = Umsatz von 1 µmol ABTS/min/ml Enzym) pro g Zellstoff resultiert.

Die Lösungen A und B werden zusammengegeben und auf 33 ml aufgefüllt.

Nach Zugabe des Zellstoffes wird für 2 min mit einem Teigkne-ter gemixt.

Danach wird der Stoff in eine auf 45°C vorgeheizte Reaktions-bombe gegeben und unter 1 - 10 bar Sauerstoffüberdruck für 1 - 4 Stunden inkubiert.

Danach wird der Stoff über einem Nylonsieb (30 µm) gewaschen und 1 Stunde bei 60°C, 2% Stoffdichte und 8% NaOH pro g Zellstoff extrahiert.

Nach erneuter Wäsche des Stoffes wird die Kappazahl bestimmt. Ergebnis vergl. Tabelle 1

### Beispiel 5

### Enzymatische Bleiche mit N-Hydroxy-N-phenyl-pivalinsäureamid und Softwood Sulfatzellstoff

5 g atro Zellstoff (Softwood O₂ delignifiziert), Stoffdichte 30% (ca. 17 g feucht) werden zu folgenden Lösungen gegeben:
A) 20 ml Leitungswasser werden mit 72,5 mg N-Hydroxy-N-phenyl-pivalinsäureamid unter Rühren versetzt, der pH-Wert mit 0,5 mol/l H₂SO₄-Lsg. so eingestellt, daß nach Zugabe des Zellstoffs und des Enzyms pH 4,5 resultiert.
B) 5 ml Leitungswasser werden mit der Menge Laccase von Trametes versicolor versetzt, daß eine Aktivität von 15 U (1 U = Umsatz von 1 µmol ABTS/min/ml Enzym) pro g Zellstoff resultiert.

Die Lösungen A und B werden zusammen gegeben und auf 33 ml aufgefüllt.

Nach Zugabe des Zellstoffes wird für 2 min mit einem Teigkne-ter gemixt.

Danach wird der Stoff in eine auf 45°C vorgeheizte Reaktions-bombe gegeben und unter 1 - 10 bar Sauerstoffüberdruck für 1 - 4 Stunden inkubiert.

Danach wird der Stoff über einem Nylonsieb (30 µm) gewaschen und 1 Stunde bei 60°C, 2% Stoffdichte und 8% NaOH pro g Zellstoff extrahiert.

Nach erneuter Wäsche des Stoffes wird die Kappazahl bestimmt. Ergebnis vergl. Tabelle 1

### Beispiel 6

### Enzymatische Bleiche mit 1-Hydroxy-3,4-dihydrochinolin-2(1H)-on und Softwood Sulfatzellstoff

5 g atro Zellstoff (Softwood O₂ delignifiziert), Stoffdichte 30% (ca. 17 g feucht) werden zu folgenden Lösungen gegeben:
A) 20 ml Leitungswasser werden mit 61,2 mg 1-Hydroxy-3,4-dihydrochinolin-2(1H)-on unter Rühren versetzt, der pH-Wert mit 0,5 mol/l H₂SO₄-Lsg. so eingestellt, daß nach Zugabe des Zellstoffs und des Enzyms pH 4,5 resultiert.
B) 5 ml Leitungswasser werden mit der Menge Laccase von Trametes versicolor versetzt, daß eine Aktivität von 15 U (1 U = Umsatz von 1 µmol ABTS/min/ml Enzym) pro g Zellstoff resultiert.

Die Lösungen A und B werden zusammen gegeben und auf 33 ml aufgefüllt.

Nach Zugabe des Zellstoffes wird für 2 min mit einem Teigkne-ter gemixt.

Danach wird der Stoff in eine auf 45°C vorgeheizte Reaktions-bombe gegeben und unter 1 - 10 bar Sauerstoffüberdruck für 14 Stunden inkubiert.

Danach wird der Stoff über einem Nylonsieb (30 µm) gewaschen und 1 Stunde bei 60°C, 2% Stoffdichte und 8% NaOH pro g Zellstoff extrahiert.

Nach erneuter Wäsche des Stoffes wird die Kappazahl bestimmt. Ergebnis vergl. Tabelle 1

### Beispiel 7

### Enzymatische Bleiche mit N-Hydroxy-(2-methyl)-acetanilid und Softwood Sulfatzellstoff

5 g atro Zellstoff (Softwood O₂ delignifiziert), Stoffdichte 30% (ca. 17 g feucht) werden zu folgenden Lösungen gegeben:
A) 20 ml Leitungswasser werden mit 60,1 mg N-Hydroxy-(2-methyl)-acetanilid unter Rühren versetzt, der pH-Wert mit 0,5 mol/l H₂SO₄-Lsg. so eingestellt, daß nach Zugabe des Zellstoffs und des Enzyms pH 4,5 resultiert.
B) 5 ml Leitungswasser werden mit der Menge Laccase von Trametes versicolor versetzt, daß eine Aktivität von 15 U (1 U = Umsatz von 1 µmol ABTS/min/ml Enzym) pro g Zellstoff resultiert.

Die Lösungen A und B werden zusammen gegeben und auf 33 ml aufgefüllt.

Nach Zugabe des Zellstoffes wird für 2 min mit einem Teigkne-ter gemixt.

Danach wird der Stoff in eine auf 45°C vorgeheizte Reaktions-bombe gegeben und unter 1 - 10 bar Sauerstoffüberdruck für 1 - 4 Stunden inkubiert.

Danach wird der Stoff über einem Nylonsieb (30 µm) gewaschen und 1 Stunde bei 60°C, 2% Stoffdichte und 8% NaOH pro g Zellstoff extrahiert.

Nach erneuter Wäsche des Stoffes wird die Kappazahl bestimmt. Ergebnis vergl. Tabelle 1

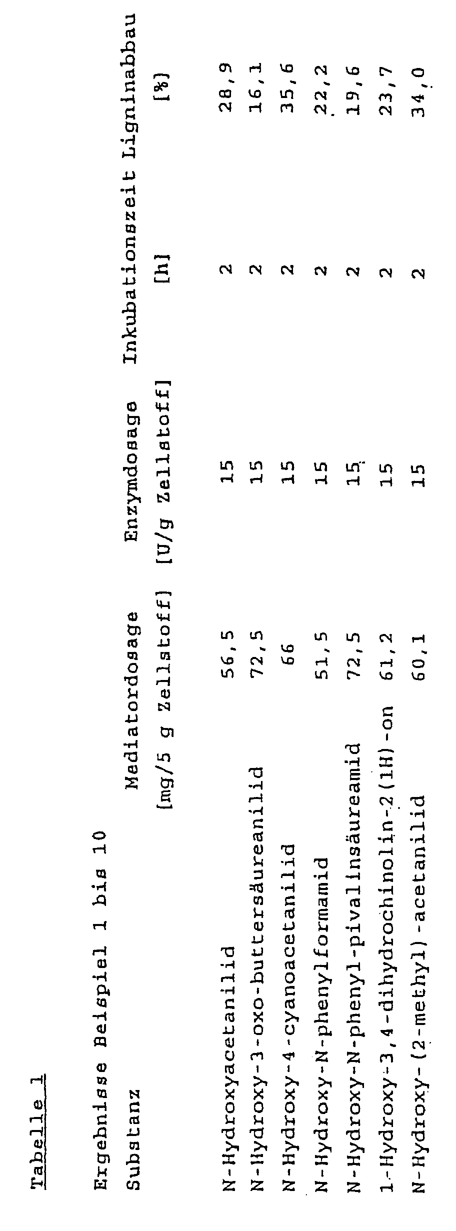

## Patentansprüche

1. Mehrkomponentensystem zum Verändern, Abbau oder Bleichen von Lignin oder ligninhaltigen Materialien enthaltend
a. mindestens ein Enzym und
b. mindestens ein geeignetes Oxidationsmittel und
c. als Mediator, mindestens eine der Verbindungen N-Hydroxyacetanilid, N-Hydroxypivaloylanilid, N-Hydroxyacrylanilid, N-Hydroxy-methylsulfonylanilid, N-Hydroxy-N-phenyl-methylcarbamat, N-Hydroxy-3-oxo-butyrylanilid, N-Hydroxy-4-cyanoacetanilid, N-Hydroxy-4-methoxyacetanilid, N-Hydroxyphenacetin, N-Hydroxy-2,3-dimethylacetanilid, N-Hydroxy-2-methylacetanilid, N-Hydroxy-4-methylacetanilid, 1-Hydroxy-3,4-dihydrochinolin-(1H)-2-on, N,N'-Dihydroxy-N,N'-diacetyl-1,3-phenylendiamin, N,N'-Dihydroxybernsteinsäuredianilid, N,N'-Dihydroxy-maleinsäuredianilid, N,N'-Dihydroxy-oxalsäuredianilid, N,N'-Dihydroxy-phosphorsäuredianilid, N-Acetoxyacetanilid, N-Hydroxymethyloxalylanilid, N-Hydroxymaleinsäuremonoanilid, N-Hydroxyformanilid.

2. Mehrkomponentensystem gemäß Anspruch 1, **dadurch gekennzeichnet, daß** als Enzym Laccase eingesetzt wird.

3. Mehrkomponentensystem gemäß einem der Ansprüche 1 oder 2, **dadurch gekennzeichnet, daß** als Oxidationsmittel Luft, Sauerstoff, Ozon, H₂O₂, organische Peroxide, Persäuren wie die Peressigsäure, Perameisensäure, Perschwefelsäure, Persalpetersäure, Metachlorperoxibenzoesäure, Perchlorsäure, Perborate, Peracetate, Persullate, Peroxide oder Sauerstoffspezies und deren Radikale wie OH⁻, OOH⁻, Singulettsauerstoff, Superoxid (O₂·⁻), Ozonid, Diaxygenyl-Kation (O₂⁺), Dioxirane, Dioxetane oder Fremy Radikale eingesetzt werden.

4. Mehrkomponentensystem gemäß einem der Ansprüche 1 bis 3, **dadurch gekennzeichnet, daß** als Mediator N-Hydroxyacetanilid eingesetzt wird.

5. Verfahren zum Behandeln von Lignin, **dadurch gekennzeichnet, daß** man die jeweils ausgewählten Komponenten a) bis c) gemäß Anspruch 1 gleichzeitig oder in beliebiger Reihenfolge mit einer wässrigen Suspension des ligninhaltigen Materials mischt.

6. Verwendung von in Anspruch 1 als Komponente c) genannten Mediatoren zum Verändern, Abbau oder Bleichen von Lignin oder ligninhaltigen Materialien.

## Claims

1. Multi-component system for modifying, degrading or bleaching lignin or lignin-containing materials, comprising
a. at least one enzyme and
b. at least one suitable oxidizing agent and
c. as mediator, at least one of the compounds N-hydroxyacetanilide, N-hydroxy-pivaloylanilide, N-hydroxyacrylanilide, N-hydroxymethylsulphonylanilide, N-hydroxy-N-phenyl-methylcarbamate, N-hydroxy-3-oxo-butyrylanilide, N-hydroxy-4-cyanoacetanilide, N-hydroxy-4-methoxyacetanilide, N-hydroxyphenacetin, N-hydroxy-2,3-dimethylacetanilide, N-hydroxy-2-methylacetanilide, N-hydroxy-4-methylacetanilide, 1-hydroxy-3,4-dihydroquinolin-(1H)-2-one, N,N'-dihydroxy-N,N'-diacetyl-1,3-phenylenediamine, N,N'-dihydroxy-succinic acid dianilide, N,N'-dihydroxy-maleic acid dianilide, N,N'-dihydroxy-oxalic acid dianilide, N,N'-dihydroxy-phosphoric acid dianilide, N-acetoxyacetanilide, N-hydroxymethyloxalylanilide, N-hydroxymaleic acid monoanilide and N-hydroxyformanilide.

2. Multi-component system according to Claim 1, **characterized in that** laccase is employed as the enzyme.

3. Multi-component system according to one of Claims 1 or 2, **characterized in that** air, oxygen, ozone, H₂O₂, organic peroxides, peracids, such as peracetic acid, performic acid, persulphuric acid, per-nitric acid, metachloroperoxybenzoic acid or perchloric acid, a perborate, a peracetate, a persulphate, a peroxide or an oxygen species and free radicals thereof, such as OH, OOH, singlet oxygen, superoxide (O₂⁻), ozonide or the dioxygenyl cation (O₂⁺), a dioxirane, a dioxetane or a Fremy radical is employed as the oxidizing agent.

4. Multi-component system according to one of Claims 1 to 3, **characterized in that** the mediator employed is N-hydroxyacetanilide.

5. Process for treatment of lignin, **characterized in that** the particular components a) to c), according to Claim 1, selected simultaneously or in any desired sequence are mixed with an aqueous suspension of the lignin-containing material.

6. Use of a mediator mentioned as component c) in Claim 1 for modifying, degrading or bleaching lignin or lignin-containing materials.

## Revendications

1. Système multicomposant pour la modification, la décomposition ou le blanchiment de la lignine ou de matériaux contenant de la lignine, comprenant
a. au moins une enzyme et
b. au moins un oxydant approprié et
c. en tant que médiateur, au moins l'un des composés N-hydroxyacétanilide, N-hydroxy-pivaloylanilide, N-hydroxyacrylanilide, N-hydroxyméthylsulfonylanilide, N-hydroxy-N-phénylméthylcarbamate, N-hydroxy-3-oxo-butyrilanilide, N-hydroxy-4-cyanoacétanilide, N-hydroxy-4-méthoxyacétanilide, N-hydroxyphénacétine, N-hydroxy-2,3-diméthylacétanilide, N-hydroxy-2-méthylacétanilide, N-hydroxy-4-méthylacétanilide, 1-hydroxy-3,4-dihydroquinolin-(1H)-2-one, N,N'-dihydroxy-N,N'-diacétyl-1,3-phénylènediamine, dianilide de l'acide N,N'-dihydroxysuccinique, dianilide de l'acide N,N'-dihydroxymaléique, dianilide de l'acide N,N'-dihydroxyoxalique, dianilide de l'acide N,N'-dihydroxyphosphorique, N-acétoxyacétanilide, N-hydroxyméthyloxalylanilide, monoanilide de l'acide N-hydroxymaléique et N-hydroxyformanilide.

2. Système multicomposant selon la revendication 1, **caractérisé en ce que** l'on utilise la laccase en tant qu'enzyme.

3. Système multicomposant selon l'une quelconque des revendications 1 ou 2, **caractérisé en ce que** l'on utilise, en tant qu'oxydant, de l'air, de l'oxygène, de l'ozone, du H₂O₂, des peroxydes organiques, des peracides tels que l'acide peracétique, l'acide performique, l'acide persulfurique, l'acide pernitrique, l'acide méta-chloroperoxybenzoïque, l'acide perchlorique, des perborates, des peracétates, des persulfates, des peroxydes ou des espèces oxygénées et leurs radicaux tels que OH⁻, OOH⁻, de l'oxygène singulet, du superoxyde (O₂^{·-}), de l'ozonide, le cation dioxygényle (O₂⁺), des dioxirannes, des dioxétanes ou des radicaux de Fremy.

4. Système multicomposant selon l'une quelconque des revendications 1 à 3, **caractérisé en ce que** l'on utilise le N-hydroxyacétanilide en tant que médiateur.

5. Procédé de traitement de la lignine, **caractérisé en ce que** les composants a) à c) selon la revendication 1, choisis dans chaque cas, sont mélangés simultanément ou dans un ordre quelconque avec une suspension aqueuse du matériau contenant de la lignine.

6. Utilisation de médiateurs mentionnés en tant que composant c) dans la revendication 1 pour la modification, la décomposition ou le blanchiment de la lignine ou de matériaux contenant de la lignine.
